# EUROPEAN PATENT APPLICATION

(11) **EP 4 539 330 A1**
(43) Date of publication of application: **16.04.2025**
(21) Application number: 24205485.6
(22) Date of filing: 09.10.2024
(51) Int. Cl.: H02P 21/02, H02P 23/02, H02P 25/18

(54) **AN ELECTRICAL POWER SYSTEM**

(30) Priority: 10.10.2023 GB 202315518
(71) Applicant: InnCat Ltd., Welshpool Powys SY21 8SU (GB)
(72) Inventor: HART, Simon, SY21 8SU Welshpool (GB)
(74) Representative: Horler, Philip John

(57) **Abstract**

The present disclosure describes an electrical power system that comprises an electrical load having a multi-turn winding that has a first portion having a first plurality of turns and a second portion having a second plurality of turns. The system also comprises a first converter for supplying a first AC current to the first portion and the second portion of the multi-turn winding and a second converter for supplying a second AC current to the second portion of the multi-turn winding.

## Description

### Technical Field

The present disclosure relates to an electrical power system that comprises an AC power source, such as an inverter, and an electrical load that is driven by the AC power source.

### Background

With development of economy and society, an energy crisis gradually emerges, and a global environment gradually deteriorates. Developing and using clean alternative energy has become an important objective in the energy industry. With continuous development of new energy power generation, energy storage, and new energy vehicle industry, an electrical power converter that is used as a core energy control apparatus becomes an important factor in clean energy application.

Among a variety of electrical power converters, a three-phase inverter is one of the converters that are applied most widely, and is used to connect a direct-current (DC) power system and a three-phase alternating-current (AC) electric motor system and transfer energy between the two systems. Three-phase motor drives utilizing inverters are well known in the industry. Typically, a DC bus supplies switched power to different phases of an AC load, for example a multiphase electric motor.

Within an inverter, switching losses can start to dominate losses at lower power outputs. This is particularly true with Silicon Carbide (SiC) and other wide bandgap semiconductor switching devices that have very low conductive losses.

It is well understood that an inverter and load systems designed for a peak power, current or torque rating, is often less efficient at lower load conditions than a system designed only for lower load conditions. In the case of the inverter, utilising a number of power electronic die in parallel to create an inverter switch at a high current rating has the consequence of paralleling the individual power semiconductor die output capacitances. At high load conditions (for example, at high current levels), the energy loss in charging and discharging this combined output capacitance is a very small percentage of the total inverter loss. However, at lower load conditions (for example, at low current levels), this wasted energy becomes a significant percentage of the total inverter loss.

Simply not switching a number of these semiconductor die during lower load conditions and using only the remaining switched die to carry the current does not reduce the combined output capacitance of the parallel semiconductor dies making up an inverter switch, so losses caused by output capacitance charging and discharging are unchanged. Furthermore, switch conduction losses are increased as a result of an increase in switch resistance caused by there being fewer active parallel semiconductor dies making up the switch.

Another technique for trying to reduce losses at low load conditions involves using two different inverters to combine to provide the supply to the same phases. This can reduce other sources of loss, but again does not reduce the combined output capacitance. Furthermore, the synchronising of both inverter switching edges may be very complex.

Another technique involves using two different inverters that feed different phases of the same load (for example, different phases of a three-phase motor). This technique does not result in the most power dense solution which means it will not be the most optimal for moving (as opposed to stationary) applications such as automotive or aerospace vehicles. It is also complex to control at higher power ratings if both inverters are used simultaneously.

We have therefore appreciated the need for an improved electrical power system that can efficiently generate and deliver AC power to a load up to relatively high load conditions, whilst still maintaining good levels of efficiency at relatively low load conditions.

### Summary

In a first aspect of the disclosure there is provided an electrical power system, comprising: an electrical load comprising a multi-turn winding that has: a first portion having a first plurality of windings; and a second portion having a second plurality of windings; a first converter for supplying a first AC current to the first portion and the second portion of the multi-turn winding; and a second converter for supplying a second AC current to the second portion of the multi-turn winding, wherein the first converter and the second converter are for coupling to the same DC power source.

In a second aspect an electrical power system, comprising: an electrical load comprising a multi-turn winding that has: a first portion having a first plurality of windings; and a second portion having a second plurality of windings; a first power supply for supplying a first AC current to the first portion and the second portion of the multi-turn winding; a second power supply for supplying a second AC current to the second portion of the multi-turn winding; and a controller coupled to the first power supply and the second power supply and configured to: determine a power level of the electrical load; and control the first power supply and the second power supply based at least in part on the determined power level of the electrical load.

In a third aspect there is provided an electric vehicle comprising the electrical power system of the first or second aspect.

In a fourth aspect there is provided a method for controlling the operation of a first converter, arranged to supply AC current to a first plurality of windings of a multi-turn winding electrical load, and a second converter, arranged to supply AC current to a second plurality of windings of the multi-turn winding electrical load, the method comprising: determining a power level of the electrical load; and controlling the first converter and the second converter based at least in part on the determined power level of the electrical load.

In a fifth aspect there is provided a controller configured to perform the method of the fourth aspect.

### Drawings

Aspects of the present disclosure are described, by way of example only, with reference to the following drawings, in which:
Figure 1A schematically illustrates a 2-level inverter phase connected to one phase winding of an electrical machine.
Figure 1B schematically illustrates a 3-level inverter phase connected to one phase winding of an electrical machine.
Figure 2 schematically illustrates an electrical system in accordance with an aspect of this disclosure.
Figure 3 schematically illustrates the AC loop inductance path during an example operation of the electrical system of Figure 2.
Figure 4 schematically illustrates the AC loop inductance path during a further example operation of the electrical system of Figure 2.
Figure 5 schematically illustrates an example torque versus speed graph showing different power regions for the electrical load of the electrical system of Figure 2.
Figure 6 schematically illustrates a further example torque versus speed graph showing different power region for the electrical load of the electrical system of Figure 2, during a range defining mission profile.
Figure 7 schematically illustrates an example of mixing the operation of the two converters of the electrical system of Figure 2.

### Detailed Description

This disclosure relates to an electrical power system that is optimised for efficiency during low power operation. In particular, the system includes an electrical load, such as a motor, having a split winding. The split winding is made up of two parts: a first part and a second part. The system also includes a power source for supplying AC power to the split winding. In particular, the power source has a first power supply, such as a first DC to AC converter, that supplies power to at least the first part of the winding (and usually also the second part) and a second power supply, such as a second DC to AC converter, that supplies power to the second part of the winding. The second power supply may then be used when the electrical load is operating at low power levels (for example, at a low speed and/or torque, in the case of a motor) and the first power supply may be used when the electrical load is not operating at low power levels. In this way, the second power supply and/or second part of the winding may be optimised for power efficiency during low power operation (where many loads tend to operate for large portions of time), whilst high power level requirements can still be fulfilled by the first power supply.

Some definitions of standard terms used in this document are:
Bidirectional switch: a switch that controls current flow in both directions. For example, it may be made up of two power semiconductor devices connected in series with the anti-parallel diodes of each device in opposite directions.

Inverter phase: an inverter converts DC power to AC power. It may be configured to output AC power to a load that has one or more different phases. For each phase of the load, a phase of AC power is output from the inverter. The components (for example, switches) of the inverter that control a particular output phase of the inverter are referred to collectively as the "inverter phase". Therefore, an inverter configured to power a three phase load will include three inverter phases, each made up of components configured to control and output a respective one of the three phases

2-level inverter phase: an inverter phase that can output an AC voltage that at any given time can take one of two voltage levels.

3-level inverter phase: an inverter phase that can output an AC voltage that any given time can take one of three voltage levels. The most common topologies are the Diode Clamped Inverter and the T-Type inverter.

Multi-level inverter phase: an inverter phase that can output an AC voltage that any given time can take one of three or more voltage levels, i.e., an n-level inverter phase, where n > 3.

A power semiconductor device may be any topology and technology, for example MOSFETs (Metal Oxide Semiconductor Field Effect Transistors), IGBTs (Insulated Gate Bipolar

Transistors), JFETs (Junction Gate Field Effect Transistors) topologies and Si, SiC, SiGe, GaAs, GaN technologies.

A switch is made up of at least one power semiconductor device. For example, and as briefly mentioned in the Background section, a switch may comprise just one power semiconductor device, or two or more power semiconductor devices connected in parallel (for example to handle relatively high currents.

Semiconductor die: a block of semiconductor material on which at least one semiconductor device or circuit is fabricated (for example, a power semiconductor device). May be of different types, may be manufactured by different technologies and may include for example integrated electrical, electro-optical or electro-mechanical circuits and/or passives. The semiconductor die may, for example, be configured as power semiconductor die, such as power MOSFETs (Metal Oxide Semiconductor Field Effect Transistors), IGBTs (Insulated Gate Bipolar Transistors), JFETs (Junction Gate Field Effect Transistors), power bipolar transistors or power diodes.

Vehicle, or automotive, range defining cycles: also referred to as driving cycles. In order to determine the range of a vehicle, a cycle of vehicle speeds, and therefore power levels, may be defined. In an electric vehicle, putting the vehicle through the range defining cycle should determine the range, or distance, that a fully charged battery is capable of achieving.

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments can be positioned in a number of different orientations, the directional terminology is used for purposes of illustration and is in no way limiting. It is to be understood that other embodiments may be utilized, and structural or logical changes may be made without departing from the scope of the present invention. The following detailed description, therefore, is not to be taken in a limiting sense, and the scope of the present invention is defined by the appended claims.

It is to be understood that the features of the various exemplary embodiments described herein may be combined with each other, unless specifically noted otherwise.

As employed in this Specification, the terms "coupled" and/or "electrically coupled" are not meant to mean that the elements must be directly coupled or connected together; the terms cover both direct coupling/connecting and indirect coupling, wherein intervening elements may be provided between the "coupled" or "electrically coupled" elements.

The switches shown are a schematic representation and may in practice be made up of one or more semiconductor dies. The capacitance shown as part of the switch represents the intrinsic capacitance of the switch and includes all other sources of local capacitance, including that of the PCB or busbar connector structure. The diode shown as part of the switch may be internal to the device, intrinsic to the technology or an external component. The number of diodes that make up a switch may be different to the number of semiconducting parts.

The charging and discharging of the local phase output capacitance of an inverter phase, made up of the intrinsic capacitances of the switches of the inverter phase, is often a large component of inverter loss. The general industry move to using wide bandgap technologies (SiC and GaN for example) has resulted in the conduction losses element reducing (i.e., a reduction in on-state resistance), and often makes the output capacitance related loss the greatest component of inverter loss during lower power operation. Most automotive range defining cycles are dominated by lower power operation, meaning that losses during low power operation can have a significant effect on the determined automotive range. Furthermore, whilst the electrical power unit of automotives must be capable of handling high-power operation, during the lifetime of an automotive a part proportion of the operation is typically in the lower-power range, meaning that inverter losses during low-power operation can have a significant effect on the overall efficiency of the vehicle.

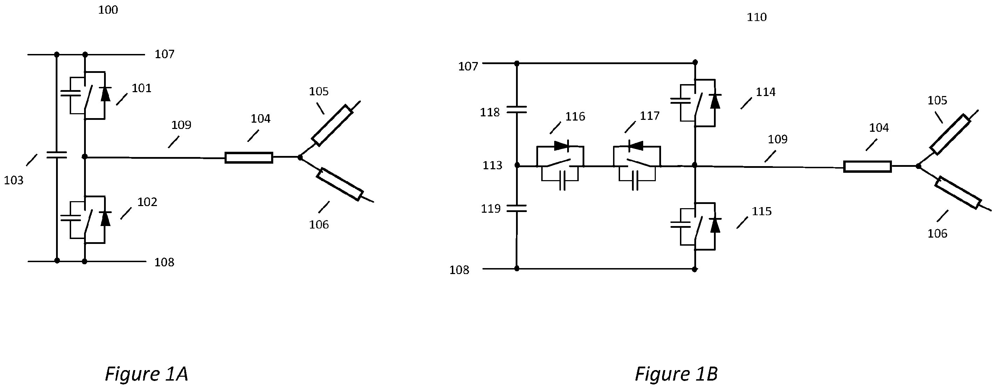

Figure 1A shows a schematic representation of an example 2-level inverter 100. In this example, the inverter 100 is connected to one phase winding 104 of an electrical machine.

The inverter 100 comprises a local energy storage capacitance 103 that is connected between a positive DC bus supply 107 and a negative DC bus supply 108.

The inverter also comprises a first inverter phase comprising an upper, or first, switch 101 and a lower, or second, switch. The first and second switches 101 and 102 are schematic illustrations of semiconductor switches that each includes a lumped element intrinsic capacitance, a switch and an anti-parallel diode.

The upper switch 101 is connected between the positive DC bus 107 and a phase output 109, which connects the inverter 100 to the phase winding 104 of the electrical machine. The upper switch 101 is also connected to a lower, or second, switch 102 that is connected between the phase output 109 and the negative DC bus 108.

The phase output 109 is connected to the outer connector of the phase winding 104, where the inner connector of the phase winding 104 is connected to another two phases 105 and 106. Phase winding 104 may be considered to be the first phase winding, phase winding 105 may be considered to be the second phase winding and phase winding 106 may be considered to be the third phase winding. Phase windings 105 and 106 are supplied by their own corresponding inverter phases, i.e., second and third inverter phases, which may each be of the same design as the first inverter phase represented in Figure 1A (i.e., they may each comprise two switches coupled in series between the positive DC bus 107 and the negative DC bus 108, with a phase winding connecting the two switches to the respective phase winding of the electrical machine). Those skilled in the art will appreciate that the inverter 100 may include any suitable number of inverter phases so as to be used with a load consisting of any number of phases, for example single phase, two-phase, four-phase, etc.

Figure 1B shows a schematic representation of an example multi-level inverter, which in this example is a 3-level inverter 110. In this example, the inverter 110 is connected to one phase winding 104 of an electrical machine. Components/features that are the same as Figure 1A use the same reference numerals and in the interest of brevity, an explanation of those components/features will not be repeated. This example 3-level inverter is a T-type inverter. The skilled person will readily appreciate other topologies for 3-level inverters, such as Diode clamped multilevel inverter, Flying capacitors multilevel inverter or Cascaded H-bridge multilevel inverter.

In this example, two local energy storage capacitors 118 and 119 are connected in series between the positive DC bus supply 107 and the negative DC bus supply 108 to create a mid-level voltage 113. The capacitors 118 and 119 may have the same capacitance as each other, or different capacitances, depending on the desired mid-level voltage 113.

An upper, first switch 114 is connected between the positive dc bus 107 to the phase output 109, and a lower, second, switch 115 is connected between the phase output 109 and the negative dc bus 108. The first switch 114 is essentially the same as the first switch 101 in Figure 1A, and the second switch 115 is essentially the same as the second switch 102 in Figure 1A.

Third switch 116 and fourth switch 117 together form a bidirectional switch. In this this example, the drain terminals of the two switches are connected to form a bidirectional switch. Alternatively, the source terminals of the two switches 116 and 117 may be connected to form a bidirectional switch. Alternatively, the two switch 116 and 117 could be connected in parallel to the mid voltage supply 113 through diodes in a parallel T configuration. Those skilled in the art will understand how to implement a bidirectional switch in this way. Any other bidirectional switch designs/structures may alternatively be used.

The phase output 109 is connected to the outer connector of the phase winding 104, where the inner connector of the phase winding 104 is connected to another two phases 105 and 106. Phase winding 104 may be considered to be the first phase winding, phase winding 105 may be considered to be the second phase winding and phase winding 106 may be considered to be the third phase winding. Phase windings 105 and 106 are supplied by their own corresponding inverter phases, i.e., second and third inverter phases, which may each be of the same design as the first inverter phase represented in Figure 1B (i.e., they may each comprise two switches connected in series between the positive DC bus 107 and the negative DC bus 108, a phase winding connecting the two switches to the respective phase winding of the electrical machine), and a bi-direction switch connecting the phase winding to the local energy storage capacitors 118 and 119. Those skilled in the art will appreciate that the inverter 110 may include any suitable number of inverter phases so as to be used with a load consisting of any number of phases, for example single phase, two-phase, four-phase, etc.

Whilst Figures 1A and 1B show examples of a 2-level inverter and a 3-level inverter, the skilled person will be aware of many other 2-level and multi-level topologies.

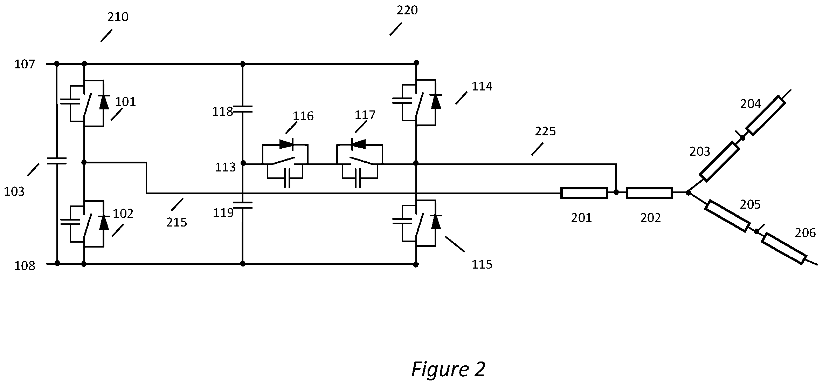

Figure 2 schematically illustrates an electrical power system in accordance with an example aspect of this disclosure. It comprises a converter phase that includes a first converter 210, which in this example is a 2-level inverter, and a second converter 220, which in this example is a 3-level inverter. Elements retain their identification numbers and functions, as per the previous diagrams and drawings, and so shall not be described further.

The phase windings of the electrical load are split into two parts. For example, the first phase load, which is powered by the converter phase represented in Figure 2, comprises a first part 201 and a second part 202. The two parts together may be referred to as a "split winding". The first part may comprise a first plurality of electrical windings and the second part may comprise a second plurality of electrical windings. The number of windings in the first part may be the same or different to the number in the second part, as explained later. The second phase load comprises two parts 203 and 204, which may be powered by a second converter phase (not shown in Figure 2 for the sake of simplicity, but which may be of the same design as the first converter phase). The third phase load comprises two parts 205 and 206, which may be powered by a third converter phase (not shown in Figure 2 for the sake of simplicity, but which may be of the same design as the first converter phase).

The output phase 215 of the first converter 210 is coupled to the outer connector of the first part 201 of the split winding. The output phase 225 of the second converter 220 is coupled between the first part 201 and the second part 202 of the split winding. The inner connector of the second part 202 of the split winding is coupled to the other two phases split windings (203/204 and 205/206). Phases 203/204 and 205/206 are supplied by their own corresponding inverter phases. Those skilled in the art will appreciate that the present invention can be used with a load consisting of any number of phases, for example a single phase load made up of a single split phase winding.

The first converter 210 and the second converter 220 can operate alone or together. In one embodiment, the second converter 220 operates during lower power or current ratings, the first converter 210 at mid-power or current ratings, and both the first converter 210 and the second converter 220 operate together at higher power or current ratings. Operation of the first converter 210 and the second converter 220 may be controlled by a controller (not shown in Figure 2 for the sake of simplicity) that is coupled to each of the switches making up the first and second converters 210 and 220 (for example, coupled to the gate/base of the power semiconductor device(s) of each of the switches in order to turn each of the switches on and off at the appropriate times). Determination of which of the first and second converters 210, 220 should be operated at any given time based on the determined power level, shall be described in more detail later.

In the example of Figure 2, both the first and second converters 210, 220, are coupled to the same DC supply 107, 108 (i.e., they are both coupled to the same DC power source, such as the same battery). This may be particularly useful for electric vehicles, for example, which typically include a single large batter for powering the electrical drive load (i.e., the electric motor). In this way, a single DC power source may be used to generate AC power by way of different types of inverter, eg 2-level or 3-level, to the electrical load, which, as explained later, may result in reduced losses during low power operation whilst still maintaining the ability to power. In this case, however, in an alternative, the DC supply for each of the first converter 210 and second converter 220 may be different, for example they may each be a different voltage level, or receive power from an energy source such as a different battery, or a fuel cell.

The use of the split winding results in an impedance, in particular an inductive impedance, between the outputs 215 and 225. This impedance results in the output capacitances of the first and second converters 210 and 220 no longer combining, which results in lower losses when only one converter is operating. In particular, when the second converter 220 is operating to supply power to the second part 202 of the load, the output capacitance of the first converter 210 do not contribute to the output capacitance of the second converter 220 (and vice-versa). Consequently, capacitance related losses are minimised.

The ratio between the number of windings in part 201 and part 202 (and the ratio of part 203 to part 204, and the ratio of part 205 to part 206), i.e., the ratio of the first plurality of windings to the second plurality of windings, may be optimised so that part 202 provides relatively low system losses (including relatively low load losses, such as low motor losses) during lower load operation when only the second converter 220 is operational. Part 202 may also be designed so that the second converter 220 can utilise lower voltage rated switches and also optionally use a lower DC supply voltage compared with that used by the first converter 210. Consequently, it can be seen that by implementing two converters 210, 220 and split windings 201, 202, overall system efficiency for low-power operation may be optimised.

Optionally, one or more characteristics of part 201 and part 202 may be different, for example: the cross-sectional size of the conductor forming the windings; the cross-sectional shape of the conductor forming the windings; and/or the material of the conductor forming the windings. In this way, part 202 may be particularly optimised for efficiency during low power operation, whilst part 201 may be optimised for mid to high power operation.

Furthermore, the connection for 225, and optionally also 215, may have a lower rating than required for the highest load rating. For example, the cable forming the connection 225 may be rated to a lower current than the maximum drive current required for the whole system, since it will only be required to supply relatively low currents. This may reduce the cost of the cable, and reduce complexity by making cable routing easier. Furthermore, if both the first and second converters 210, 220 are operated simultaneously for high power levels, the cable forming connection 215 may also be rated to a lower current than the maximum drive current required for the whole system, since it will only supply only a portion of the maximum drive current, the other portion being supplied by the connection 225.

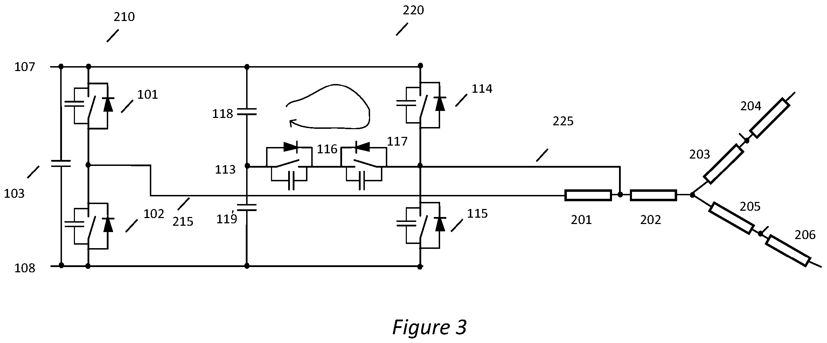

Figure 3 schematically illustrates the AC loop inductance path and local switched capacitance within the inverter phase during second converter 220 only switching (i.e., while the second converter 220 is operational).

When the upper switch 114 and/or the bidirectional switch 116, 117 are transitioning from ON to OFF or from OFF to ON, the AC loop inductance consists of those switches and the upper capacitance 118. The switches of the first converter 210 do not form part of the AC loop inductance during this operation, because they are effectively isolated from the second converter 220 by the impedance of part 201. Furthermore, the bulk DC capacitors 103, 118, 119 do not contribute to the switching losses, since their time constants are too long.

In more detail, the time take for each of the switches 114, 116, 117 to transition may be approximately 100ns (i.e., about 10MHz). The capacitors 103, 118 and 119 are used to smooth out the PWM period at PWM switching frequencies, for example less than 50kHz. As a result, they have a relatively large capacitance compared with the output capacitance of each switch, for example they may be at least 500µF, such that they have relatively long time constants. As a result, they do not have time to react to the transition of the switches 114, 116, 117 going from ON to OFF, or OFF to ON. Consequently, they do not contribute to switching losses in a capacitive energy way, but they are still part of the transient inductance. The output capacitance of the power device(s) making up each of the switches is a lot lower, for example less than 1µF, which means that their time constant is a lot shorter and, as a result, their output capacitances can contribute to switching losses. However, the impedance of the part 201 means that the time constant of the current loop involving the part 201 is relatively long (for example, the inductance of part 201 may be at least 100µH) such that it does not have time to react to the transition of the switches 114, 116, 117 going from ON to OFF, or OFF to ON. This means that the capacitances of the switches of the first converter 210, are effectively isolated from the AC loop of the second converter 220, and therefore do not contribute to any switching losses.

When the lower switch 115 and/or the bidirectional switch 116, 117 are transitioning from ON to OFF or from OFF to ON, the AC loop inductance consists of those switches and the lower capacitance 119. For the same reasons as explained above, the switches of the first converter 210 do not form part of the AC loop inductance during this operation, and the bulk capacitances 103, 118 and 119 do not contribute to the switching losses.

Therefore, it can be seen that the local output capacitance of the second converter 220 consists of only those parasitic capacitance elements associated with the switches of the second converter 220. The elements from the first converter 210 are blocked by the inductance of the section of split winding 201. This reduces the losses associated with switching during second converter 220 only operation.

The turns ratio split between the split winding parts 201 and 202 may be optimised to match the second converter's 220 voltage and current rating. It will be appreciated that the AC voltage level required for a given current and load (for example, motor speed in the case of a rotating load such as a motor), will be lower for the second converter 220 than for the first converter 210. In more detail, the split winding 201, 202 acts like a potential divider. As a result, the second converter 220 will see less voltage than the first converter 210. For example, if the load is a motor, motors always act as generators in terms of their back EMF. This is proportional to the speed and the number of turns in the winding. Motor torque is generated when current can flow. To make current flow, there needs to be a voltage difference across the winding's intrinsic resistance, which is called the motor stator (or armature) resistance. The second converter 220 will see less back EMF and less of the winding's intrinsic resistance compared with non-split winding designs, since it is driving only part 202 of the split winding. As a result, the second converter 220 can supply a lower voltage for a given current and load compared with if it were driving a non-split winding, or to put it another way, for the same voltage it can drive a greater load (for example, it can create more torque at higher motor speeds). This provides a greater degree of design freedom.

Most automotive range defining cycles are dominated by lower power operation; however, the motors must be designed to also operate at the full peak rating. Typically, in previous designs, this results in a higher percentage of losses at lower power conditions than could be achieved by a motor designed only for low power conditions.

However, in the present disclosure, splitting the windings allow the inner parts (202, 203 and 205) to be designed to reduce the losses at lower power conditions while the outer parts (201, 204 and 206) can be designed in combination with the inner parts for peak levels of power.

Whilst in this example the first and second converters 210, 220 use the same DC supply 107, 108, in an alternative the first and second converters 210, 220 use different DC supply voltage levels and/or energy sources (eg, batteries). The voltage supplying the second converter 220, for example, may be lower than that supplying the first converter 210 since the split windings mean a lower voltage is required for a given current and speed (as explained above). This permits switches with a lower voltage rating to be used within the second converter 220. It also reduces the switching losses, since switching losses caused by the output capacitances of the switches tend to be proportional to the voltage being switched.

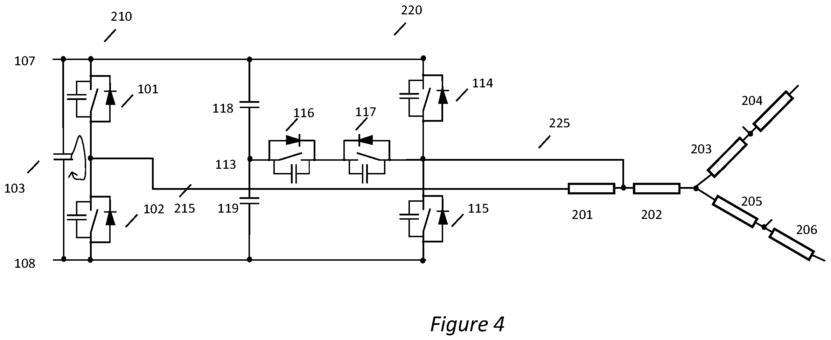

Figure 4 schematically illustrates the AC loop inductance path and local switched capacitance during switching of the first converter 210 (i.e., while the first converter 210 is operating and the second converter 220 is turned off).

When the upper switch 101 and/or the lower switch 102 are transitioning from ON to OFF or from OFF to ON, the AC loop inductance consists of those switches and the capacitor 103. The output capacitance of the second converter 220 does not form part of the AC loop inductance during this operation since it is isolated by the part 201 of the split winding (as explained earlier). Furthermore, the capacitances of bulk capacitors 103, 118 and 119 do not contribute to the switching losses, since their time constants are too long (as explained earlier). This all reduces the losses associated with switching during first converter 210 only switching.

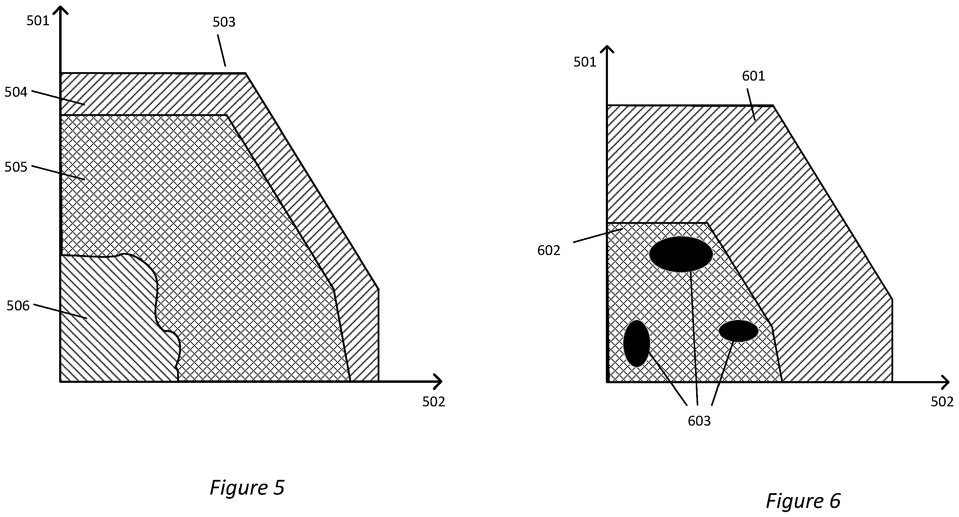

Figure 5 schematically illustrates an example torque versus speed graph showing different power regions/levels for an electrical load that is a motor. In this example, three levels are defined - low power, mid power and high power. However, in an alternative, a different number of power levels may be defined, for example two (as explained later).

The torque axis is 501 and the speed axis is 502. In this example, motor toque is a measurement of electrical load performance (i.e., motor performance) and motor speed is another measurement of electrical load performance. Area 506 defines low power operation, area 505 defines mid power performance and area 504 defines high power performance. It can be seen that each of these performance levels there are defined by predetermined ranges of torque and speed. The line 503 represents the limits of the motor operation.

A controller may be configured to determine whether the electrical load is operating at low power, mid power or high power based on at least one measure of electrical load performance (in this example, torque and speed), a pre-determined range of values defining a low power level (for example, the values of torque and speed defining the bounding of area 506) and a pre-determined range of values defining a mid-power level (for example, the values of torque and speed defining the bounding of area 505). It may be configured to identify when the load is operating at a high power either by virtue of non-zero measurements not falling within the low or mid power ranges, or using a pre-determined range of values defining a high power level (for example, the values of torque and speed defining the bounding of area 504). The controller may then control operation of the first and second converters 210, 220 (for example, by controlling the switches making up the converters) based on this determination.

For example, when it is determined that the electrical load is operating at low power, region 506, just the second converter 220 is operated and the first converter 210 is turned off. As explained earlier, the second converter 220 and split winding part 202 may be optimised to minimise losses during low power operation. When considering automotive range defining drive cycles, they are mostly based at these lower speeds and torques so by optimising efficiency in this region, maximum vehicle range given by the typical automotive drive cycle may be optimised.

Further to this example, when it is determined that the electrical load is operating at mid power, region 505, just the first converter 210 may be operated. The first converter 210 and the combined parts 201 and 202 of the winding may therefore be designed and optimised primarily for mid and high-power operation.

When it is determined that the electrical load is operating at high power, region 504, both the first and second converters 210, 220 may be operated to deliver maximum levels of current to the load (which is an operation described in more detail later).

Figure 6 schematically illustrates an alternative example torque versus speed graph showing two different power regions/levels for an electrical load that is a motor: low power and high power.

Area 601 represents a high power level and area 602 represents a low power level. By using measurements of motor speed and/or torque and at least one of a predetermined range of values defining the low power region and/or a predetermined range of values defining the high power region, it may be determined whether the electrical load is operating in the low power region or high power region. In automotive drive cycles, high torque and speed operation would generally be outside of the majority of points defined in a range defining mission profile. The majority of points defined in a range defining mission profile would usually be at lower speeds and torques, within the area 602, and clusters of points with high frequency of occurrence are shown in Figure 6 by the shapes 603. In this example, when it is determined that the electrical load is operating at the low power level, just the second converter 220 may be operated, and when it is determined that the electrical load is operating at the high power level, just the first converter 210 may be operated. As explained earlier, this should reduce losses during low power operation, thereby maximising the vehicle range given by the typical automotive drive cycle.

As mentioned above, splitting the motor windings allow the inner number of turns 202, 203 and 205 to be designed to reduce the losses at lower power conditions while the outer number of turns 201, 204 and 206 can be designed in combination with the inner number turns for peak levels of power.

Returning to the operation represented in Figure 5, when it is determined that the load is operating at a high power level, the first and second converters 210, 220 may operate together. In this example, synchronisation is required for them to operate together. For example, different switching duty cycles may be required, especially when the voltage supplies for the first and second converters 210, 220 are different, for example voltage levels and/or energy sources.

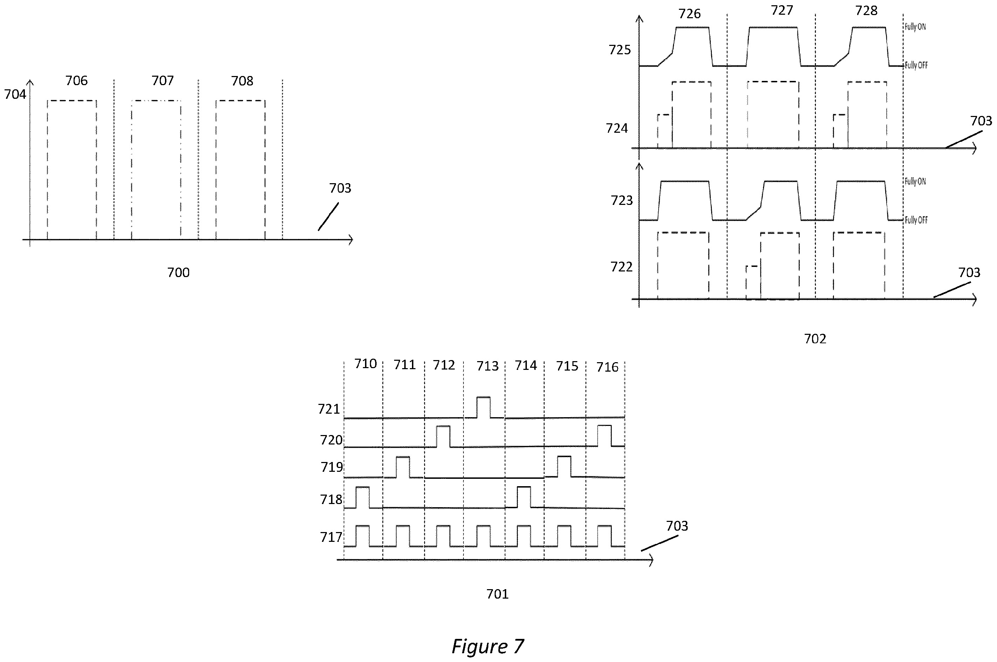

Figure 7 schematically illustrates an example of mixing the operation of the two converters 210, 220 such that they operate together.

The converters 210, 220 may be operated with the same PWM period (i.e. switching frequency). The operational converter selected can change per PWM period, or in ratio. For example, the first converter 210 may operate (i.e., conduct current) during four PWM periods and then stop switching for one period, during which the second converter 220 may take over. This pattern may repeat such that while the electrical load is operating in the high power region, the first converter 210 supplies power to the load 4/5 of the time, and the second converter 220 supplies power to the load 1/5 of the time. Of course, different ratios of operation between the first and second converters 210, 220 may alternatively be used.

Returning to Figure 7, drawing 700 shows time, 703, against the switch gate signal command, 704, for the same motor phase. The drawing shows three consecutive PWM periods, 706, 707 and 708. During PWM periods 706 and 708, the first converter 210 is operational (i.e., it is switching to supply an AC voltage to the load) and during period 707, the second converter 220 is operational (i.e., it is switching to supply an AC voltage to the load).

In an alternative, both the first and second converters 210, 220 may operate simultaneously, in which case balancing of current, or losses (and thus heat), can be achieved by altering their relative switching impedances. For example, the first converter 210 may have four semiconductor die in parallel per switch, where each die has a separate gate signal (control signal). The second converter 220 may have one die per switch. If the die all have the same impedance, R, then the switches in the second converter 220 will have an impedance R and the switches in the first converter 210 will have an impedance R when one die is gate controlled all the way down to R/4 if all its die are gate controlled. If it were desired to share, for example, 50% of the current to the first converter 210 and 50% to the second converter 220, then the first converter 210 may be controlled such that only one die for each switch is gate controlled during each PWM period. Note that the actual die within each switch of the first converter 210 may be changed each PWM period to distribute the heat/loss long term, as long as only one die in each switch is controlled to operate in each PWM period.

Drawing 701 in Figure 7 shows an example of this. Reference 703 denotes time and seven PWM periods are shown, 710 to 716. The single die in each switch of the second converter 220 has a gate control signal denoted 717. It is active for all the PWM periods. 718 denotes the gate control signal for a first die within each switch of the first converter 210 - it is active every forth PWM period, 710 and 714 in this illustration. 719, 720 and 721 represent the gate control signals for each of the other three die within each switch of the first converter 210.

If it is desired to share 50% current to the first converter 210 and 50% to the second converter 220, then for the first converter 210, one die per switch would be gate controlled in each PWM period. So, only one die within each switch of the first converter 210 would be active during each PWM period. In this example, the selected die within each the switch is changed every PWM period with a pattern that repeats every four PWM periods: 718, then 719, then 720, then 721, then returning to 718. However, in an alternative, if a different share of current between the two converters 210, 220, were desired, more than one die in each switch of the first converter 210 may be gate controlled in each PWM period. For example, if it is desired to share 66% current to the first converter 210, two dies in each switch of the first converter 210 may be gate controlled in each PWM period. It will be appreciated that this is just one example, and in an alternative, each switch in the first and second converters 210, 220 may be made up of any number of dies, and that any number of dies may be gate controlled in each PWM period, depending on the desired current share between the converters.

With simultaneous switching of two converters 210, 220, the rate of transition (on to off and off to on) can be changed so that one of the converters provides most of the current carrying during the actual switch transition. The rate of transition can be altered during operation by changing the amount of gate current (or voltage) provided during the switch transition. Alternatively, the rate of transition can be altered during operation by one of the converters using a stepped gate drive voltage (or current), which results in that converter having a slow initial transition gradient (the first voltage step) then a faster gradient (a second, or subsequent, steps in gate voltage). Alternatively, the gate control signal to the first converter 210 may be delayed with respect to the gate control signal to the second converter 220 so that the second converter 220 provides the full switch transition edge loss.

Drawing 702 of Figure 7 shows an example of this. Reference 703 denotes time. Three PWM periods are shown, 726, 227 and 728. During PWM period 726, the first converter 210 switch gate control signal, 724, is made up of two steps. This results in two different gradients to the switch OFF to ON transient shown in 725. The second converter 220 switch gate control signal, 722, has only one step and this one faster transition shown in 723. This results in the second converter 220 taking most of the OFF to ON transition losses.

Both converter switch gate control signals have one step, resulting in a similar gradient of transition from ON to OFF. In PWM period 727, the second converter 220 has a stepped gate signal, 722 and the first converter 210 has a single step, 724.

The ratio of step voltage and the time of the first step may be used to control the mix between converters. The ratio of PWM periods during which the first converter 210 has a stepped gate signal to that of the second converter 220 may also be used to control the mix between converters.

Furthermore, the transition from ON to OFF may alternatively or additionally be stepped and that the number and shape of the steps may be optimised. In addition to the many technical benefits identified above, in the example implementations where one of the converters is a multi-level converter, system redundancy may also be improved. For example, if the bidirectional switch of the 3-level topology were to fail, the converter may still be operated as a 2-level converter.

Additionally or alternatively, extreme operation conditions may also be supported by the power systems disclosed herein, for example during active short circuit of the load. For example, in the case of the load being a motor, during control failure at high speeds, the inverter phase(s) may no longer control the motor's inherent generation of back EMF voltage. In this case, anti-parallel diodes within the inverters act as an uncontrolled rectifier and the DC supply voltage may increase past the limit for the inverters, capacitors, battery, etc. Instead, the inverter phases will connect the motor phases together, which makes the voltage seen by the inverter phases equal zero. In this case, a high magnitude of current flows through the short-circuited motor windings and the inverter switches. However, because in the examples described herein each inverter phase includes two converters 210, 220, this burden may be shared in a controlled way between the two converters 210, 220.

Furthermore, by having each inverter phase comprise two converters, failure conditions may be supported. For example, if one of the converters were to fail, the other converter should still be able to provide some power on its own to the load. This means, in an automobile scenario, that the vehicle may still be able to go into "limp" mode.

The skilled person will readily appreciate that various alterations or modifications may be made to the above described aspects of the disclosure without departing from the scope of the disclosure.

In the examples given above, the power level of the electrical load is determined based on the torque and/or speed of the load, which is a particular example for motors. Additionally or alternatively, the following measurements may be used to determine the power level of the electrical load (which may be a motor or any other sort of load): a measure of mechanical power of the load; a measure of the AC current supplied to the load; a measure of the DC current supplied to the power source (for example, supplied to the inverter phase); the frequency of the AC current and/or voltage supplied to the electrical load.

Those skilled in the art will appreciate that for each of the converters 210, 220, different topologies of inverter can be used, including both topologies that exist now and those that may be developed in the future. For example, for multi-level inverters (particularly with an odd number of levels) any of the following may be used: diode clamped inverter, flying capacitor inverter, Cascade H-bridge inverter, T-type inverter, etc. The number of voltage levels is generally selected to be odd to permit natural balancing of the voltages. For 2-level inverters (or even numbered multi-level inverters), alternative topologies may include cascaded 2 level topologies, H-bridge topologies, etc.

Furthermore, whilst the first and second converters 210, and 220 in the above described examples are different level converters (one is 2-level the other is 3-level), in an alternative, they may be configured to generate the same number of output levels as each other (for example, both 2-level or both multi-level). In this case, improved efficiency at low powers may still be achieved at least by virtue of optimising the split load winding and optionally also making other low power optimisations for the second converter 220, such as from the choice of components and/or topology.

Optionally, in addition to controlling the first and second converters 210, 220 based on the power level of the electrical load, at least one temperature relating to the first converter 210 and/or the second converter 220 may also be a factor. For example, at least one temperature sensor may be associated with each of the first converter 210 and/or the second converter (for example, a temperature sensor(s) measuring the temperature of one or more of the switches in the converter). If the temperature(s) of the converters is deemed to be within an acceptable range, they may be operated based on the power level of the load, as described above. However, during low power operation, if at least one temperature associated with the second converter 220 is deemed to be outside of an acceptable range, just the first converter 210 (or both the first converter 210 and second converter 220) may be used to power the load for a period of time, to allow the second converter 220 to cool down. Likewise, during mid or high power operation, if at least one temperature associated with the first converter 210 is deemed to be outside of an acceptable range, just the second converter 220 (or both the first converter 210 and second converter 220) may be used to power the load for a period of time, to allow the first converter 210 to cool down. In this way, the lifetime and reliability of the inverter phases may be improved, why still achieving the efficiency benefits most of the time (since they should be operating within normal, acceptable temperature ranges most of the time).

Furthermore, different modulation control strategies (for example PWM, or space vector modulation - SVM, etc) applicable to this invention exist and may be developed in the future.

The controller described above may take any suitable form to perform the functionality described above. For example, it may comprise a microcontroller, software configured to perform the functionality when executed on one or more processors, fixed or programable logic, one or more circuits configured to perform the described functionality, an FPGA, etc.

Those skilled in the art will appreciate that alternative load winding types, conductors, materials technology, circuit topology, number of phases, and load type are all applicable to this invention. For example, the present disclosure is not relevant only for loads that are motors, but may be used for any inductive loads that are driven by AC power and that are required to operate at different power levels at different times.

In the case where the load is an electric machine, those skilled in the art will appreciate that alternative machine types and flux orientations are all applicable to this disclosure.

Those skilled in the art will appreciate that, even though the present application shows the combining of two converters 210, 220, in an alternative, three of more converters may be used for each inverter phase, with a corresponding number of splits in the windings of the driven load.

In addition, while a particular feature or aspect of an embodiment of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise".

Furthermore, it should be understood that embodiments of the disclosure may be implemented in discrete circuits, partially integrated circuits or fully integrated circuits or programming means. Also, the term "exemplary" is merely meant as an example, rather than the best or optimal. It is also to be appreciated that features and/or elements depicted herein are illustrated with particular dimensions relative to one another for purposes of simplicity and ease of understanding, and that actual dimensions may differ substantially from that illustrated herein.

Although specific embodiments have been illustrated and described herein, it will be appreciated by those of ordinary skill in the art that a variety of alternate and/or equivalent implementations may be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

### Aspects of the disclosure

Non-limiting aspects of the disclosure are set out in the following numbered clauses.
1. An electrical power system, comprising:
   an electrical load comprising a multi-turn winding that has:
      a first portion having a first plurality of turns/windings; and
      a second portion having a second plurality of turns/windings;
   a first converter for supplying a first AC current to the first portion and the second portion of the multi-turn winding; and
   a second converter for supplying a second AC current to the second portion of the multi-turn winding,
   wherein the first converter and the second converter are for coupling to the same DC power source.
2. The electrical power system of clause 1, wherein the second converter is for supplying the second AC current to the second portion of the multi-turn winding when the electrical load is operating at low power, and
   wherein the first converter is for supplying the first AC current to the first portion and the second portion of the multi-turn winding when the electrical load is not operating at low power.
3. The electrical power system of clause 2, wherein the second converter and the second portion of the multi-turn winding are optimised for electrical efficiency at low power.
4. The electrical power system of clause 2 or clause 3, configured such that when the electrical load is operating at low power, only the second AC current is supplied to the multi-turn winding and the first converter is turned off.
5. The electrical power system of any of clauses 2 to 4, further comprising:
   a controller configured to:
   determine whether the electrical load is operating at low power based at least one measure of electrical load performance that is indicative of power and at least one pre-determined range of values defining a low power level; and
   control the first converter and the second converter based on the determination of whether the electrical low is operating at low power.
6. The electrical power system of clause 5, wherein the at least one measure of electrical load performance that is indicative of power comprises at least one of:
   a measure of mechanical power of the electrical load;
   a speed of the electrical load;
   a torque of the electrical load;
   a measure of electrical current supplied to the electrical load;
   a measure of electrical current supplied by the DC power source;
   a frequency of electrical current and/or voltage supplied to the electrical load.
7. The electrical system of any of clauses 4 to 6, wherein the system is configured such that when the electrical load is not operating at low power, only the first AC current is supplied to the multi-turn winding and the second converter is turned off.
8. The electrical system of any of clauses 4 to 6, wherein the system is configured such that when the electrical load is operating at mid power, only the first AC current is supplied to the multi-turn winding and the second converter is turned off, and
   when the electrical load is operating at high power, both the first AC current and the second AC current are supplied to the multi-turn winding.
9. The electrical power system of clause 8, when dependent on clause 5, wherein the controller is further configured to:
   determine whether the electrical load is operating at low power, mid power or high power based on at least one measure of electrical load performance that is indicative of power, the pre-determined range of values defining a low power level and a pre-determined range of values defining a mid-power level;
      and
   control the first converter and the second converter based on the determination of whether the electrical low is operating at low power, mid power or high power.
10. An electrical power system, comprising:
   an electrical load comprising a multi-turn winding that has:
      a first portion having a first plurality of turns/windings; and
      a second portion having a second plurality of turns/windings;
   a first power supply for supplying a first AC current to the first portion and the second portion of the multi-turn winding;
   a second power supply for supplying a second AC current to the second portion of the multi-turn winding; and
   a controller coupled to the first power supply and the second power supply and configured to:
      determine a power level of the electrical load; and
      control the first power supply and the second power supply based at least in part on the determined power level of the electrical load.
11. The electrical power system of clause 10, wherein the controller is configured to determine the power level of the electrical load based on at least one measurement associated with the electrical load that is indicative of power, and
   wherein the controller is configured to determine whether the power level of the electrical load is high using a first pre-determined range of power levels that are defined as high power levels.
12. The electrical power system of clause 11, wherein the at least one measurement associated with the electrical load that is indicative of power comprises at least one of:
   a measure of mechanical power of the electrical load;
   a speed of the electrical load;
   a torque of the electrical load;
   a measure of electrical current supplied to the electrical load;
   a measure of electrical current supplied by the DC power source;
   a frequency of electrical current supplied to the electrical load.
13. The electrical power system of any of clauses 10 to 12, wherein the controller is configured to turn on both the first power supply and the second power supply to supply first AC current and second AC current to the multi-turn winding when the determined power level of the electrical load is high.
14. The electrical power system of any of clauses 10 to 13, wherein the controller is configured to turn on only the second power supply to supply only the second AC current to the multi-turn winding when the power level of the electrical load is low.
15. The electrical power system of clause 14, wherein the controller is configured to determine whether the power level of the electrical load is low using a second pre-determined range of power levels that are defined as low power levels.
16. The electrical power system of clause 14 or clause 15, wherein the second plurality of turns/windings and the second power supply are optimised for electrical efficiency when the power level of the electrical load is low.
17. The electrical power system of any of clauses 11 to 16, wherein the first power supply and the second power supply are couplable to the same DC power source.
18. The electrical power system of any of clauses 11 to 16, wherein the first power supply is couplable to a first DC power source and the second power supply is couplable to a second DC power source.
19. The electrical power system of clause 18, wherein the first DC power source is configured to supply a different DC voltage than the second DC power source.
20. The electrical power system of any of clauses 10 to 19, wherein the control is configured to control the first power supply and the second power supply based further on at least one temperature measurement associated with the first power supply and/or at least one temperature measurement associated with the second power supply.
21. The electrical power system of any preceding clause, wherein the multi-turn winding comprises a first end, a second end and an intermediate connection point between the first end and the second end, and
   wherein the first portion is between the first end and the intermediate connection point, and the second portion is between the intermediate connection point and the second end, and
   wherein an output of the first power supply is coupled to the first end, and an output of the second power supply is coupled to the intermediate connection point such that the first portion is located between the output of the first power supply and the output of the second power supply.
22. The electrical power system of any preceding clause, wherein a cross-sectional size and/or a cross-sectional shape and/or a material of a conductor making up the first plurality of electrical turns/windings is different to a cross-sectional size and/or a cross-sectional shape and/or a material of a conductor making up the second plurality of electrical turns/windings.
23. The electrical power system of any preceding clause, wherein the electrical load is a multi-phase electrical load and the multi-turn winding is for a first phase of the multi-phase electrical load.
24. The electrical power system of any preceding clause, wherein the electrical load is an electrical motor.
25. The electrical power system of any preceding clause, wherein the second converter is configured to generate more voltage levels in its AC output than the first converter, or
   wherein the second power supply is configured to generate more voltage levels in its AC output than the first power supply.
26. The electrical power system of clause 25, wherein the first converter is a two-level converter, and the second converter is a converter configured to output at more than two levels, or
   wherein the first power supply is a two-level converter, and the second power supply is a converter configured to output at more than two levels.
27. An electric vehicle comprising the electrical power system of any preceding clause.
28. A method for controlling the operation of a first converter, arranged to supply AC current to a first plurality of turns/windings of a multi-turn winding electrical load, and a second converter, arranged to supply AC current to a second plurality of turns/windings of the multi-turn winding electrical load, the method comprising:
   determining a power level of the electrical load; and
   controlling the first converter and the second converter based at least in part on the determined power level of the electrical load.
29. A controller configured to perform the method of clause 28.

## Claims

1. An electrical power system, comprising:
an electrical load comprising a multi-turn winding that has:
a first portion having a first plurality of turns; and
a second portion having a second plurality of turns;
a first converter for supplying a first AC current to the first portion and the second portion of the multi-turn winding; and
a second converter for supplying a second AC current to the second portion of the multi-turn winding,
wherein the first converter and the second converter are for coupling to the same DC power source.

2. The electrical power system of claim 1, wherein the second converter is for supplying the second AC current to the second portion of the multi-turn winding when the electrical load is operating at low power, and
wherein the first converter is for supplying the first AC current to the first portion and the second portion of the multi-turn winding when the electrical load is not operating at low power.

3. The electrical power system of claim 2, wherein the second converter and the second portion of the multi-turn winding are optimised for electrical efficiency at low power.

4. The electrical power system of claim 2 or claim 3, configured such that when the electrical load is operating at low power, only the second AC current is supplied to the multi-turn winding.

5. The electrical power system of any of claims 2 to 4, further comprising:
a controller configured to:
determine whether the electrical load is operating at low power based at least one measure of electrical load performance that is indicative of power and at least one pre-determined range of values defining a low power level; and
control the first converter and the second converter based on the determination of whether the electrical low is operating at low power.

6. The electrical power system of claim 5, wherein the at least one measure of electrical load performance that is indicative of power comprises at least one of:
a measure of mechanical power of the electrical load;
a speed of the electrical load;
a torque of the electrical load;
a measure of electrical current supplied to the electrical load;
a measure of electrical current supplied by the DC power source;
a frequency of electrical current and/or voltage supplied to the electrical load.

7. The electrical system of any of claims 4 to 6, wherein the system is configured such that when the electrical load is not operating at low power, only the first AC current is supplied to the multi-turn winding.

8. The electrical system of any of claims 4 to 6, wherein the system is configured such that when the electrical load is operating at mid power, only the first AC current is supplied to the multi-turn winding and the second converter is turned off, and
when the electrical load is operating at high power, both the first AC current and the second AC current are supplied to the multi-turn winding.

9. The electrical power system of claim 8, when dependent on claim 5, wherein the controller is further configured to:
determine whether the electrical load is operating at low power, mid power or high power based on at least one measure of electrical load performance that is indicative of power, the pre-determined range of values defining a low power level and a pre-determined range of values defining a mid-power level;
and
control the first converter and the second converter based on the determination of whether the electrical low is operating at low power, mid power or high power.

10. The electrical power system of any preceding claim, wherein the multi-turn winding comprises a first end, a second end and an intermediate connection point between the first end and the second end, and
wherein the first portion is between the first end and the intermediate connection point, and the second portion is between the intermediate connection point and the second end, and
wherein an output of the first converter is coupled to the first end, and an output of the second converter is coupled to the intermediate connection point such that the first portion is located between the output of the first converter and the output of the second converter.

11. The electrical power system of any preceding claim, wherein a cross-sectional size and/or a cross-sectional shape and/or a material of a conductor making up the first plurality of turns is different to a cross-sectional size and/or a cross-sectional shape and/or a material of a conductor making up the second plurality of turns.

12. The electrical power system of any preceding claim, wherein the second converter is configured to generate more voltage levels in its AC output than the first converter.

13. An electric vehicle comprising the electrical power system of any preceding claim.

14. A method for controlling the operation of a first converter, arranged to supply AC current to a first plurality of turns of a multi-turn winding electrical load, and a second converter, arranged to supply AC current to a second plurality of turns of the multi-turn winding electrical load, the method comprising:
determining a power level of the electrical load; and
controlling the first converter and the second converter based at least in part on the determined power level of the electrical load.

15. A controller configured to perform the method of claim 14.
